Europäisches Patentamt

European Patent Office

Office européen des brevets

(11) Veröffentlichungsnummer: **0 073 015**
**B1**

# (12) EUROPÄISCHE PATENTSCHRIFT

(45) Veröffentlichungstag der Patentschrift:
31.07.85

(21) Anmeldenummer: 82107533.0

(22) Anmeldetag: 18.08.82

(51) Int. Cl.⁴: **C 08 F 14/06, C 08 F 2/22,**
**C 08 F 291/00**

(54) Verfahren zur Polymerisation von Vinylchlorid in wässriger Emulsion.

(30) Priorität: 22.08.81 DE 3133352

(43) Veröffentlichungstag der Anmeldung:
02.03.83 Patentblatt 83/9

(45) Bekanntmachung des Hinweises auf die Patenterteilung:
31.07.85 Patentblatt 85/31

(84) Benannte Vertragsstaaten:
BE DE GB

(56) Entgegenhaltungen:
EP - A - 0 054 651
DE - A - 1 964 029

(73) Patentinhaber: HOECHST AKTIENGESELLSCHAFT,
Postfach 80 03 20, D-6230 Frankfurt am Main 80 (DE)

(72) Erfinder: Bötsch, Franz, Dr., Hochfelinstrasse 5,
D-8261 Burgkirchen/Alz (DE)
Erfinder: Engelmann, Manfred, Dr., Baader Strasse 2a,
D-8263 Burghausen/Salzach (DE)
Erfinder: Skura, Josef, Dr., Hochgernweg 9,
D-8261 Burgkirchen/Alz (DE)

**0 073 015**

**Beschreibung**

Gegenstand der Erfindung ist ein Verfahren zur Polymerisation von Vinylchlorid in wäßriger Emulsion gemäß Patentanspruch 1.

Polyvinylchlorid wird bereits seit vielen Jahren durch Polymerisation von Vinylchlorid in wäßriger Emulsion in Gegenwart von wasserlöslichen Initiatoren und wasserlöslichen Emulgatoren in großtechnischem Maße hergestellt. Es ist hierbei häufig wünschenswert, mit möglichst geringen Emulgatorkonzentrationen in der Polymerisationsmischung zu arbeiten. Einesteils verteuert der Emulgator das Polymerisationsrezept, anderenteils können bei höheren Emulgatorkonzentrationen Schwierigkeiten bei der Entfernung von restlichem nichtumgesetztem Monomeren durch Schäumen auftreten. Der Emulgator wird vom Polymeren adsorbiert und bleibt bei der Aufarbeitung als Nebenbestandteil im Polymeren enthalten. Die Folge sind Verschlechterung der Transparenz bei aus dem Polymerisat erzeugten Artikeln, beispielsweise Folien, außerdem wird die Wasserempfindlichkeit solcher Artikel durch den Emulgatorgehalt des Polymeren erhöht. Da aus Polyvinylchlorid auch eine ganze Reihe Artikel gefertigt werden, die mit Lebensmitteln in Kontakt kommen, ist es auch von dieser Anordnung her wünschenswert, ein möglichst reines, emulgatorfreies Polymeres zu verarbeiten. Wenn auch viele für die Polymerisation von Vinylchlorid übliche Emulgatoren als physiologisch unbedenklich gelten, so können sie doch eine unerwünschte Wirkung dahingehend haben, daß sie die Extraktion von Verarbeitungshilfsstoffen, wie sie für die thermoplastische Verarbeitung unumgänglich sind, durch das Lebensmittel aus dem Polyvinylchlorid-Fertigartikel begünstigen.

Besonders für die Verarbeitung zusammen mit Weichmachern in sogenannten PVC-Pasten ist es wünschenswert, Polymere mit möglichst gleichmäßigen vergleichsweise großen Primärartikeln zu erhalten. Solche Polymere werden erhalten, wenn die Polymerisationsmischung möglichst wenig Emulgator enthält. Für die Pasten-Anwendung ist ferner ein geringer Emulgatorgehalt vorteilhaft, da hierdurch Störungen bei der Verschäumung vermieden werden.

Für die diskontinuierliche (chargen- oder absatzweise) Polymerisation von Vinylchlorid sind eine Reihe Verfahren bekannt, die es ermöglichen, mit besonders geringen Emulgatorgehalten zu polymerisieren. Diese Verfahren beruhen mehr oder weniger darauf, den Emulgator während der Polymerisation nach einem bestimmten Zugabeprogramm entweder in Portionen oder kontinuierlich der Polymerisationsmischung zuzusetzen, dann die Polymerisation zu beenden und die gebildete Polymerisationsdispersion wie üblich aufzuarbeiten.

So ist aus DE-C-843 163 ein Verfahren zur Polymerisation von Vinylchlorid in wäßriger Emulsion bekannt, bei dem eine bestimmte Menge des Monomeren in Gegenwart einer bestimmten Menge eines vorher durch Polymerisation in wäßriger Emulsion hergestellten Keimlatex, der eine bekannte Anzahl Teilchen bekannter Größe enthält, so polymerisiert wird, daß die Latexteilchen auf einen mittleren Durchmesser von 500 bis 20 000 Å (50 bis 2000 nm) anwachsen. Während der Polymerisation soll die Menge des Dispergiermittels auf den gebildeten Polymerteilchen 20 bis 60% der Menge betragen, die theoretisch erforderlich ist, um die Oberfläche der Polymerenteilchen ganz zu bedecken. Diese theoretisch erforderliche Dispergiermittelmenge wird aus dem Molgewicht und dem molaren Flächenquerschnitt des dispergierenden Mittels sowie aus dem Gewicht eines Kubik-Ångström des Polymeren, dem Durchmesser eines Polymerteilchens von durchschnittlicher Oberfläche und dem Durchmesser eines Polymerteilchens vom Durchschnittsvolumen berechnet und danach das Dispergiermittel beim Beginn der Polymerisation eingestellt. In dem Maße, wie die Teilchengröße während der Polymerisation anwächst, wird Dispergiermittel zur Polymerisationsmischung gegeben, wobei das Umwandlungsverhältnis des Monomeren in Polymeres entweder durch häufige Probenahme gravimetrisch oder durch Teilchengrößenbestimmung unter dem Elektronenmikroskop oder durch Messung der entwickelten Reaktionswärme ermittelt wird.

Ferner ist aus DE-C-926 043 ein Verfahren zur Herstellung von wäßrigen Polyvinylchlorid-Dispersionen durch Polymerisation von Vinylchlorid in Gegenwart von in Wasser gelöstem Katalysator bekannt, wobei das Emulgiermittel dem Polymerisationssystem erst zugefügt wird, nachdem die Polymerisation begonnen hat, jedoch bevor die Polymerisatdispersion zu koagulieren beginnt. In einer Ausführungsform des Verfahrens kann eine weitere Emulgatorzugabe kontinuierlich nach der ersten Zugabe während der Polymerisation erfolgen. Es kann auch während der Polymerisation noch Monomeres und/oder Wasser zur Polymerisationsmischung gegeben werden, es handelt sich trotzdem um ein diskontinuierliches Verfahren, da aus dem Reaktionskessel die erzeugte Polymerisatdispersion erst nach Beendigung des gesamten Polymerisationsvorganges abgezogen wird.

Weiterhin ist aus DE-A-1 964 029 ein Verfahren zur Herstellung emulgatorarmer stabiler Polyvinylchlorid-Emulsionen durch diskontinuierliche Polymerisation von Vinylchlorid bekannt, wobei eine vorgegebene Menge des Monomeren mit ständig steigender Emulgatorkonzentration der wäßrigen Flotte polymerisiert, bis bei einem Umsatz von 50 bis 100% die Gesamtmenge des Emulgators in der Polymerisationsmischung vorliegt. Die Zugabe des Emulgators richtet sich nach dem erzielten Vinylchlorid-Umsatz.

Die genannten Verfahren sind vergleichsweise umständlich, insbesondere wenn ein extra Keimlatex produziert werden muß, die diskontinuierliche Fahrweise erlaubt gegenüber der kontinuierlichen nur geringere Raum-Zeit-Ausbeuten, die Umsatzbestimmung über die Messung der entwickelten Reak-

**0 073 015**

tionswärme ist relativ ungenau, die gravimetrische Umsatzbestimmung oder die Teilchengrößenbestimmung unter dem Elektronenmikroskop umständlich.

Die Verfahrensweise aller drei genannten Schriften ist auf das kontinuierliche Polymerisationsverfahren nicht anwendbar, da hier die Polymerisationsmischung nach einer kurzen Anlaufphase über lange Zeit einen in gewissen Grenzen schwankenden konstanten Umsatz des Monomeren aufweist und nicht etwa wie beim diskontinuierlichen Verfahren einen ständig wachsenden Monomer-Umsatz. Das gleiche gilt für das Anwachsen des Volumens der polymerisierten Teilchen, welches nach DE-C-843 163 ständig kontrolliert werden soll.

Für die Herstellung von Polyvinylchlorid in wäßriger Emulsion in Gegenwart relativ geringer Mengen Emulgator ist aus DE-C-2 521 862 ein Verfahren bekannt, bei dem in Gegenwart von 1,5 bis 3 Gew.-% (bezogen auf eingesetzte Monomere) eines Emulgatorgemisches aus Alkali- oder Ammoniumsalzen von Sulfobernsteinsäurediestern und Alkali- oder Ammoniumsalzen von Alkylsulfonsäuren mit 8 bis 18 C-Atomen im Alkylrest und/oder Alkylarylsulfonsäuren mit insgesamt 6 bis 16 C-Atomen im Alkylrest polymerisiert wird. Unter 1,5 Gew.-% Emulgatorgemisch werden im allgemeinen keine stabilen Latices mehr erhalten, es tritt Koagulatbildung ein, außerdem wird eine vermehrte Krustenbildung an den Wandungen des Polymerisationskessels und Einbauten, z. B. Rührern, festgestellt, die mit der Polymerisationsmischung in Kontakt kommen. Diese Koagulate und abgelösten Krusten können im weiteren Verlauf der Aufarbeitung zu erheblichen Schwierigkeiten führen, beispielsweise durch Verstopfen von Pumpen, Filtern und Düsen.

Aufgabe der vorliegenden Erfindung ist es, ein kontinuierliches Polymerisationsverfahren für Vinylchlorid in wäßriger Emulsion bereitzustellen, das die weiter oben beschriebenen Nachteile nicht aufweist und mit dem Polymerisate erhalten werden, die ein sehr gleichmäßiges Eigenschaftsbild zeigen.

Eine weitere Aufgabe ist, mit einem kontinuierlichen Emulsionspolymerisationsverfahren Produkte mit größerer Primärteilchengröße und geringerem Emulgatorgehalt, als es bisher möglich war, zu erzeugen, die sich besonders für die Verarbeitung zusammen mit Weichmacher als sogenannte Polyvinylchloridpasten eignen.

Diese Aufgabe wird gelöst durch ein Verfahren zur Polymerisation von Vinylchlorid in wäßriger Emulsion in Gegenwart von mindestens einem wasserlöslichen Initiator und mindestens einem wasserlöslichen Emulgator sowie in Abwesenheit oder Gegenwart von 0,5 bis 15 Gew.-%, bezogen auf eingesetztes Vinylchlorid, von mit Vinylchlorid copolymerisierbaren Monomeren und/oder mit Vinylchlorid pfropfpolymerisierbaren Polymeren, ferner in Abwesenheit oder Gegenwart von weiteren Polymerisations-Hilfsstoffen, wobei die Ausgangsstoffe einem Reaktionsraum kontinuierlich zugeführt werden, die erzeugte Polymerisatdispersion kontinuierlich aus dem Reaktionsraum abgezogen wird und die Oberflächenspannung der Polymerisationsmischung kontinuierlich oder in Abständen von 5 bis 90 min gemessen wird, dadurch gekennzeichnet, daß mit den gemessenen Werten der Oberflächenspannung die Zugabe des Emulgators zur Polymerisationsmischung so gesteuert wird, daß deren Oberflächenspannung auf Werten gehalten wird, die 1 bis 5 mN · m$^{-1}$ über der Oberflächenspannung einer wäßrigen Emulgatorlösung liegen, die nach Art und Menge soviel Emulgatore(en) und, sofern angewendet, weitere Polymerisations-Hilfsstoffe enthält, wie eine Lösung der Gesamtmenge aller für die Polymerisation verwendeten Emulgatoren und weiteren Polymerisations-Hilfsstoffen in der Gesamtmenge des während der Polymerisation zugeführten Wassers.

Die Oberflächenspannung kann nach verschiedenen an sich bekannten Methoden gemessen werden (siehe J. Stauff, »Kolloidchemie«, Springer Verlag/Berlin—Göttingen—Heidelberg, 1960, Seite 325), beispielsweise nach der Lamellen-Abreißmethode mit dem Digital-Tensiometer der Firma Krüss/Hamburg oder nach der Tropfenzählmethode im Stalagmometer nach Traube oder nach der Methode des maximalen Blasendrucks, beispielsweise mit dem Gerät »Sensadyne 5000« der Madison Kipp Corp., Madison, USA. Letzteres Gerät hat den Vorteil, daß es für kontinuierliche Messungen geeignet ist. Zweckmäßig wird vor der Messung das nicht umgesetzte Monomere bzw. die nicht umgesetzten Monomeren bis auf geringe Restgehalte aus der Polymerisationsmischung entfernt. Die Probenahme für die Messung erfolgt während der Polymerisation entweder direkt aus dem Polymerisationsreaktor, zweckmäßig an einer Stelle, die mindestens 40% der inneren Gesamtlänge (Höhe) des Reaktors von der Einspeisung der Reaktionskomponenten entfernt liegt oder aus der Polymerisationsmischung, die den Reaktor bereits verlassen hat, zweckmäßig an einer Stelle, an der bereits auf Atmosphärendruck entspannt wurde und der Hauptteil des bzw. der nicht umgesetzten Monomeren nach an sich bekannten Verfahren aus der Reaktionsmischung entfernt wurden. An der zuletzt genannten Stelle wird vorteilhaft auch das weiter obengenannte kontinuierliche Meßgerät »Sensadyne 5000« eingesetzt.

Prinzipiell könnte ein kontinuierliches Meßgerät auch für Messungen im Reaktor oder in einem Nebenschluß (by-pass) zum Reaktor an einer Stelle, wie weiter oben beschrieben, eingesetzt werden. Das hierfür geeignete Meßinstrument muß dann unter Druck arbeiten.

Sofern diskontinuierlich gemessen wird, genügt es im allgemeinen, in Abständen von 5 bis 90 min, vorzugsweise in Abständen von 10 bis 60 min, eine Probe zu nehmen. Unter 5 min gelingt es bei diskontinuierlichen Meßverfahren im allgemeinen nicht, die Regelgenauigkeit zu steigern, über 90 min wird die Regelung zu ungenau und der erfindungsgemäße Effekt nur sehr unvollkommen oder überhaupt nicht erreicht.

3

Vorzugsweise wird eine kontinuierliche Messung der Oberflächenspannung angewendet.

Erfindungsgemäß wird mit den gemessenen Werten der Oberflächenspannung die Zugabe des Emulgators zur Polymerisationsmischung so gesteuert, daß die Oberflächenspannung der Polymerisationsmischung 1 bis 5 mN · m⁻¹ über der Oberflächenspannung einer wäßrigen Emulgatorlösung liegt, die nach Art und Menge soviel Emulgator(en) und, sofern angewendet, weitere Polymerisationshilfsstoffe enthält, wie eine Lösung der Gesamtmenge aller für die Polymerisation verwendeten Emulgatoren und weiteren Polymerisationshilfsstoffen in der Gesamtmenge des während der Polymerisation zugeführten Wassers.

Die Zugabe des Emulgators zur Polymerisationsmischung erfolgt zweckmäßig über Dosiervorrichtungen, beispielsweise Dosierpumpen. Der für die Polymerisation verwendete Emulgator bzw. die Emulgatoren können entweder in der Hauptmenge des für die Polymerisation verwendeten Wassers gelöst zugegeben werden oder getrennt von der Hauptmenge des Wassers als entsprechend konzentriertere Lösung. Als Lösungsmittel werden verwendet Wasser oder mit Wasser vollständig oder in weiten Bereichen mischbare organische Lösungsmittel wie aliphatische Alkohole mit 1 bis 4 Kohlenstoffatomen oder Aceton. Letztere Lösungsmittel werden bevorzugt zusammen mit Wasser eingesetzt, wenn der Emulgator bzw. die Emulgatoren in Wasser allein nicht mit genügend hoher Konzentration löslich sind.

Die Steuerung der Emulgatorzugabe zur Polymerisationsmischung kann entweder von Hand oder maschinell erfolgen, wobei in letzterem Fall zweckmäßig eine elektronische Auswerteeinheit eingesetzt wird, die die als Meßsignal eingehende Oberflächenspannung in ein Steuersignal für die maschinelle Einstellung der Emulgatormengenzugabe umwertet.

Durch Zugabe einer größeren oder kleineren Menge des Emulgators oder der Emulgatoren zur Polymerisationsmischung wird deren Oberflächenspannung auf Werte gehalten, die 1 bis 5 mN · m⁻¹ über der Oberflächenspannung einer zum Vergleich dienenden wäßrigen Emulgatorlösung liegen, die weiter unten näher beschrieben wird. Wird der Wert von 1 mN · m⁻¹ unterschritten, so wird das erzeugte Polymerisat in zunehmendem Maße zu feinteilig. Außerdem treten Regelschwierigkeiten auf, weil in diesem Bereich relativ große Emulgatorkonzentrationsunterschiede in der Polymerisationsmischung deren Oberflächenspannung nur vergleichsweise wenig beeinflussen. Oberhalb 5 mN · m⁻¹ wird in zunehmendem Maße Koagulatbildung in der Polymerisationsmischung festgestellt, die Belagsbildung an den Wänden der Reaktionsgefäße, die mit der Polymerisationsmischung in Berührung kommen, nimmt zu, die erzeugte Polymerisationdispersion enthält grobe Partikel (auch »Grieß« genannt), die zu Verstopfungen bei der Weiterverarbeitung der Polymerisationdispersion führen können. Außerdem weist das erzeugte Polymerisat bei dessen thermoplastischer Verarbeitung einen erhöhten Anteil Stippen (Fischaugen) sowie häufig schlechtere Thermostabilität auf. Sofern das erzeugte Polymerisat zusammen mit Weichmachern zu Pasten verarbeitet wird, werden schlechtere Pastenviskositäten beobachtet.

Vorzugsweise wird die Zugabe des Emulgators zur Polymerisationsmischung so gesteuert, daß die Oberflächenspannung dieser Polymerisationsmischung auf Werte gehalten wird, die 1 bis 4 und insbesondere 1 bis 3 mN · m⁻¹ über der Oberflächenspannung der weiter obengenannten wäßrigen Vergleichsemulgatorlösung liegen, wobei zweckmäßig jeweils ein bestimmter Oberflächenspannungswert als Optimum angesteuert wird.

Als Vergleichslösung für die Steuerung der Oberflächenspannung dient eine wäßrige Emulgatorlösung, die nach Art und Menge soviel Emulgator(en) und, sofern angewendet, weitere Polymerisationshilfsstoffe enthält, wie eine Lösung der Gesamtmenge aller für die Polymerisation verwendeten Emulgatoren und weiteren Polymerisationshilfsstoffen in der Gesamtmenge des während der Polymerisation zugeführten Wassers. Eine solche Vergleichslösung kann unter Zugrundelegung des für die Polymerisation anzuwendenden Rezeptes leicht in kleineren Mengen hergestellt werden. Das Polymerisationsrezept richtet sich nach den gewünschten Polymerisationseigenschaften, entsprechende Rezepte sind dem Fachmann bekannt und werden in der Regel bei längeren Produktionsläufen optimiert. Unter »weitere Polymerisationshilfsstoffe« sind außer Emulgatoren, monomerem Vinylchlorid, gegebenenfalls weiteren Monomeren für die Copolymerisation mit Vinylchlorid und gegebenenfalls weiteren Polymeren für die Pfropfpolymerisation mit Vinylchlorid alle Stoffe zu verstehen, die bei der Polymerisation eingesetzt werden und sich in der für die Polymerisation verwendeten Wassermenge lösen. Solche Stoffe sind weiter unten näher beschrieben. Hierzu gehören auch beispielsweise anorganische Salze, die die Emulgatoren von ihrer Herstellung als Verunreinigung enthalten. Die Messung der Oberflächenspannung an der Vergleichslösung erfolgt mit derselben Meßeinrichtung und bei gleicher Temperatur mit der die Messung der Oberflächenspannung an der Polymerisationsmischung durchgeführt wird. Ergibt die Messung an der Vergleichslösung beispielsweise eine Oberflächenspannung von 32 mN · m⁻¹, so wird die Oberflächenspannung der Polymerisationsmischung durch entsprechende Zugabe des Emulgators auf Werte gehalten, die bei 33 bis 37, vorzugsweise 33 bis 36 und insbesondere 33 bis 35 mN · m⁻¹ liegen, wobei zweckmäßig ein bestimmter Oberflächenspannungswert, beispielsweise 35 oder 34 mN · m⁻¹, angesteuert wird.

Die Polymerisation wird in Gegenwart von mindestens einem wasserlöslichen Emulgator durchgeführt. Der Emulgator sollte im allgemeinen zu mindestens 1 Gew.-%, bezogen auf die Lösung, in Wasser bei 20° C löslich sein. Sofern Mischungen von mehreren Emulgatoren verwendet werden, kann

4

die Löslichkeit eines Emulgators auch unter 1 Gew.-% liegen, sofern die Mischung mindestens einen weiteren Emulgator enthält, der gut bis sehr gut, das heißt zu 5 Gew.-% und mehr, bezogen auf die Lösung, in Wasser bei 20°C löslich ist. Die Polymerisation wird in Gegenwart von 0,8 bis 5 Gew.-%, vorzugsweise 1,0 bis 1,8 Gew.-%, bezogen auf eingesetzte Monomere, von einem oder mehreren Emulgatoren durchgeführt. Unter 0,8 Gew.-% ist es schwierig, stabile Polymerisatdispersionen zu erhalten, es werden Koagulatbildung und eine deutlich erhöhte Zahl an Grobteilchen (sogenanntem »Grieß«) festgestellt. Die Polymerisatdispersion wird scherempfindlich, es bilden sich Ablagerungen an Stellen hohen Schergefälles, beispielsweise bei der Weiterverarbeitung der Polymerisatdispersion an Pumpen und Düsen. Über 5 Gew.-% tritt eine unnötige Verteuerung des Polymerisationsrezeptes ein, so erzeugte Polymerisate geben Fertigerzeugnisse, beispielsweise Folien von schlechter Transparenz und hoher Wasserempfindlichkeit. Außerdem sind solche Polymerisate physiologisch bedenklich und können beispielsweise für Artikel, die mit Lebensmitteln in Berührung kommen, nicht eingesetzt werden.

Es können anionische, amphotere, kationische sowie nichtionogene Emulgatoren verwendet werden. Als anionische Emulgatoren sind geeignet beispielsweise Alkali- oder Ammoniumsalze von Fettsäuren, wie Laurin-, Palmitin- oder Stearinsäure, von in $\alpha$-Stellung zur Carboxylgruppe verzweigten aliphatischen Carbonsäuren mit 12 bis 22 C-Atomen, wie 2-Hexyldecansäure; 2-Octyl-dodecansäure, von sauren Fettalkoholschwefelsäureestern, von Paraffinsulfosäuren, von Alkylarylsulfo-säuren, wie Dodecylbenzol- oder Dibutylnaphthalinsulfosäure, von Sulfobernsteinsäuredialkylestern sowie die Alkali- und Ammoniumsalze von epoxygruppenhaltigen Fettsäuren, wie Epoxystearinsäure, von Umsetzungsprodukten von Persäuren, z. B. Peressigsäure mit ungesättigten Fettsäuren, wie Öl- oder Linolsäure oder ungesättigten Oxyfettsäuren, wie Ricinolsäure. Als amphotere bzw. kationenaktive Emulgatoren sind beispielsweise geeignet: Alkylbetaine, wie Dodecylbetain, sowie Alkylammoniumsalze, wie Oxethyldodecylammoniumchlorid. Als nichtionogene Emulgatoren sind beispielsweise geeignet: Polyoxyethylenether von Fettalkoholen oder aromatischen Hydroxyverbindungen; Polyoxyethylenester von Fettsäuren sowie Polypropylenoxid-Polyethylenoxid-Kondensationsprodukte.

Die einzusetzenden Emulgatoren bzw. Emulgatormischungen werden im allgemeinen in Wasser gelöst der Polymerisationsmischung zugegeben. Zur Verbesserung der Löslichkeit können, wie bereits weiter oben ausgeführt, dem Wasser organische Lösungsmittel, beispielsweise niedere aliphatische Alkohole oder Aceton, zugesetzt werden.

Ferner wird die Polymerisation in Gegenwart von mindestens einem wasserlöslichen Initiator durchgeführt, das ist ein Initiator, der im allgemeinen zu mindestens 0,5 Gew.-%, bezogen auf die Lösung, in Wasser bei 20°C löslich ist. Von solchen radikalbildenden Initiatoren werden der Polymerisationsmischung so viel zugesetzt, daß sie 0,001 bis 1 Gew.-%, vorzugsweise 0,01 bis 0,3 Gew.-%, bezogen auf eingesetzte Monomere, enthält. Geeignete Initiatoren sind beispielsweise Peroxydisulfate, Peroxydiphosphate, Perborate des Kaliums, Natriums oder Ammoniums, Wasserstoffperoxid, tert.-Butylhydroperoxid oder andere wasserlösliche Peroxide sowie auch Mischungen verschiedener Katalysatoren, wobei diese Katalysatoren auch in Gegenwart von 0,001 bis 1 Gew.-%, bezogen auf Monomere, einer oder mehrerer reduzierender Substanzen, die zum Aufbau eines Redex-Katalysatorsystems geeignet sind, wie z. B. Sulfite, Bisulfite, Dithionite, Thiosulfate, Aldehyd-sulfoxylate, z. B. Natriumformaldehyd-sulfoxylat, eingesetzt werden können. Gegebenenfalls kann die Polymerisation in Gegenwart von 0,05 bis 10 ppm, bezogen auf Metall pro Monomere, von löslichen Metallsalzen, beispielsweise des Kupfers, Silbers, Eisens, Nickels, Kobalts oder Chroms vorgenommen werden.

Neben Initiatoren und Emulgatoren kann die Polymerisation in Gegenwart von Puffersubstanzen, beispielsweise Alkaliacetat, Borax, Alkaliphosphat, Alkalicarbonat, Ammoniak oder Ammoniumsalzen von Carbonsäuren sowie von Molekülgrößenreglern, wie beispielsweise aliphatische Aldehyde mit 2 bis 4 C-Atomen, Halogenkohlenwasserstoffe, wie z. B. Di- und Trichlorethylen, Chloroform, Bromoform, Methylenchlorid oder Mercaptanen, durchgeführt werden.

Zur Copolymerisation mit Vinylchlorid sind beispielsweise eines oder mehrere folgender Monomerer geeignet: Olefine, wie Ethylen oder Propylen, Vinylester von geradkettigen oder verzweigten Carbonsäuren mit 2 bis 20, vorzugsweise 2 bis 4 Kohlenstoffatomen, wie Vinylacetat, -propionat, -butyrat, -2-ethylhexoat; Vinylhalogenide, wie Vinylfluorid, Vinylidenfluorid, Vinylidenchlorid, Vinylether, ungesättigte Säuren, wie Malein-, Fumar-, Acryl-, Methacrylsäure und deren Mono- oder Diester mit Mono- oder Dialkoholen mit 1 bis 10 C-Atomen; Maleinsäureimid sowie dessen N-Substitutionsprodukte mit aromatischen, cycloaliphatischen sowie gegebenenfalls verzweigten aliphatischen Substituenten.

Zur Pfropfpolymerisation können beispielsweise elastomere Polymerisate verwendet werden, die durch Polymerisation von einem oder mehreren folgender Monomerer erhalten wurden: Diene, wie Butadien, Cyclopentadien; Olefine, wie Ethylen, Propylen; Styrol, ungesättigte Säuren, wie Acryl- oder Methacrylsäure sowie deren Ester mit Mono- oder Dialkoholen mit 1 bis 10 Kohlenstoffatomen, Acrylnitril, Vinylverbindungen, wie Vinylester von geradkettigen oder verzweigten Carbonsäuren mit 2 bis 20, vorzugsweise 2 bis 4 Kohlenstoffatomen, Vinylhalogenide, wie Vinylidenchlorid und, zusammen mit mindestens einem der zuvor genannten Monomeren, auch Vinylchlorid.

Weitere geeignete Polymerisationshilfsstoffe sind zum Beispiel beschrieben in dem Buch »Polyvinylchlorid und Vinylchlorid-Mischpolymerisate« von H. Kainer, Springer-Verlag, Berlin/Heidelberg/ New York, 1965, Seiten 34 bis 59.

Nach der Polymerisation können den als wäßrige Emulsion bzw. nach Trocknung als Pulver anfallenden Polymerisaten weitere Stoffe zur Stabilisierung bzw. zur Verbesserung iher Weiterverarbeitungseigenschaften zugesetzt werden.

Die Polymerisation wird im allgemeinen bei Temperaturen von 30 bis 85° C, vorzugsweise von 40 bis 80° C, bis zu Umsätzen von 75 bis 97%, vorzugsweise 85 bis 95%, insbesondere 87 bis 92%, bezogen auf eingesetzte Monomere, durchgeführt.

Der pH-Wert während der Polymerisation beträgt im allgemeinen 4 bis 10,5.

Das Verfahren des eingesetzten Monomergewichtes zum Gewicht des verwendeten Wassers beträgt zweckmäßig 1 : 3 bis 1 : 0,8. Dieses Gewichtsverhältnis wird vorteilhaft so gewählt, daß Polymerisatdispersionen mit Feststoffgehalten von etwa 40 bis 48 Gew.-% erhalten werden.

Die kontinuierlich aus dem Reaktionsraum, beispielsweise einem Reaktor, ausgetragene Polymerisatdispersion wird entspannt und von der Hauptmenge des oder der nicht umgesetzten Monomeren nach an sich bekannten Verfahren, beispielsweise durch Ausbreiten in dünner Schicht oder Versprühen unter Verwendung von Unterdruck bei Zimmertemperatur oder erhöhten Temperaturen, befreit. Hierbei sollte sich die Wassermenge in der Polymerisatdispersion nur unwesentlich ändern. Das heißt, diese Wassermenge sollte sich so wenig wie möglich, beispielsweise durch Verdampfung von Wasser, vermindern oder durch Einkondensation von Wasserdampf erhöhen. An der so erhaltenen Polymerisatdispersion wird die Oberflächenspannung vorzugsweise kontinuierlich gemessen. Nun wird wie üblich weiterverarbeitet, das Polymere wird im allgemeinen durch Verdampfen des Wassers, beispielsweise im Sprühtrockner, entfernt. Gegebenenfalls kann die Polymerisatdispersion vor der Trocknung durch physikalische Methoden, beispielsweise Ultrafiltration, von einem Teil der wäßrigen Flotte befreit werden.

Das neue Verfahren eignet sich vorzugsweise für die Polymerisation von Vinylchlorid in Gegenwart von 0,5 bis 15 Gew.-%, bezogen auf eingesetztes Vinylchlorid, von mit Vinylchlorid copolymerisierbaren Monomeren. Besonders gute Ergebnisse werden erhalten, wenn Vinylchlorid in Gegenwart von 0,5 bis 10 Gew.-%, bezogen auf eingesetztes Vinylchlorid, von mit Vinylchlorid copolymerisierbaren Monomeren polymerisiert wird. Insbesondere gute Ergebnisse liefert auch die Homopolymerisation von Vinylchlorid.

Das erfindungsgemäße Verfahren ermöglicht es, kontinuierlich mit guter Raum-Zeit-Ausbeute Polymerisate mit sehr gleichmäßig guten Eigenschaften, beispielsweise bezüglich Thermostabilität und Pastenviskosität, herzustellen, die sich durch einen besonders niedrigen Anteil an groben Partikeln (sogenanntem »Grieß«) durch niedrigen Emulgatorgehalt, gute Transparenz und geringe Wasserempfindlichkeit der damit erzeugten Artikel auszeichnen. Die so erzeugten Polymerisate eignen sich besonders für die Verarbeitung in Mischung mit Weichmachern als sogenannte Polyvinylchlorid »Pasten« sowie zur Herstellung von Fertigartikeln, die mit Lebensmitteln in Berührung kommen sollen.

Trotz des vergleichsweise niedrigen Emulgatorgehaltes sind die erfindungsgemäß erzeugten Polymerisatdispersionen wenig scherempfindlich. Sie können wie bisher nach kontinuierlichem Verfahren nur mit höherem Emulgatorgehalt, erzeugte Polymerisatdispersionen verarbeitet, beispielsweise gepumpt und versprüht werden.

Nachfolgende Beispiele sollen die Erfindung näher erläutern:

Die angegebenen Meßwerte wurden wie folgt ermittelt: K-Wert: Nach DIN 53 726; Lösungsmittel Cyclohexanon:


Thermostabilität


Rezept
100 Teile  Polymeres
 50 Teile  Di-ethylhexyl-phthalat
  1 Teil   Bariumstabilisator*)
  1 Teil   Cadmiumstabilisator*)

*) Barium- bzw. Cadmiumsalze von einem Säuregemisch, bestehend aus p-tert.-Butyl-benzoesäure und verzweigtkettigen, aliphatischen Carbonsäuren mit 9 bis 11 C-Atomen.

Das Di-ethylhexyl-phthalat und die Stabilisatoren werden verrührt und innerhalb 3 min das Polymer gleichmäßig zugegeben. Die Mischung wird nun mit einem Jahnke- und Kunkel-Kreuzrührer bei 750 Upm 12 min lang homogenisiert. Von der so gewonnenen Paste wird je 1 Tropfen pro Glas in mehrere Reagenzgläser gegeben und in ein Ölbad gehängt, das auf 170° C ± 0,2° C erwärmt ist.

Zunächst wird in einem Vorversuch bestimmt, bei wieviel Minuten eine deutliche Gelb-Braunverfärbung der Proben auftritt. Zur eigentlichen Messung werden 10 beschickte Gläser in das Ölbad eingebracht und 5 min vor der im Vorversuch ermittelten Zeit das erste Glas, dann jede weitere Minute ein Glas dem Bad entnommen und so genauer die Zeit bis zur ersten deutlichen gelbbraunen Färbung bestimmt. Das Stabilisatorsystem ist so gewählt, daß ein relativ scharfer, gut reproduzierbarer Farbumschlag erfolgt.

## Pastenviskosität

In ein 400-ml-Becherglas werden 80 g Di-ethylhexyl-phthalat eingewogen, anschließend innerhalb 3 min bei 500 Upm Drehzahl 60 g Polymerisat und innerhalb weiterer 3 min bei 760 Upm Drehzahl weitere 60 g Polymerisat eingerührt. Nun wird 10 min bei 750 Upm weitergerührt und danach die Mischung 60 min auf 20°C temperiert. Nach dieser Zeit wird von einer Probe die Viskosität in Pascal mal Sekunde (Pa · s) in einem Rotationsviskosimeter (»Rotavisco« der Firma Haake) bei einem Schergefälle von 40 s$^{-1}$ bestimmt, wobei nach dem Einfüllen in die Meßkammer des Gerätes noch 15 min gewartet wird, um eine genaue Temperatureinstellung auf 20°C zu gewährleisten. Analog erfolgt die Messung einer weiteren Probe nach 24 Stunden. Während der gesamten Zeit bleibt die ursprüngliche Mischung auf 20°C temperiert.

## Anteil an groben Teilchen (»Grieß«)

1 kg Polymerisatdispersion von bekanntem Polymerisatgehalt wird durch ein Sieb von 0,1 mm Maschenweite laufengelassen, der Siebrückstand wird mit Wasser gewaschen, getrocknet und gewogen. Unter Berücksichtigung der Polymerisatmenge in der Dispersion wird aus dem Gewicht des Siebrückstandes der Anteil an groben Partikeln in Gewichtsprozent, bezogen auf Polymerisat, berechnet.

## Transparenz

Sie wird an einer 1 mm dicken aus dem Polymerisat gepreßten Platte mit Hilfe einer Ulbricht-Kugel gemessen, wie beschrieben in »Kunststoffe«, Band 59 (1969), Seite 502 ff., und angegeben in Promille Streulichtanteil.

## Wasseraufnahme

Die Messung erfolgt an Folien nach DIN 53 495.

Für die Vergleichsversuche und erfindungsgemäßen Beispiele wird zur Polymerisation ein senkrechtstehender Autoklav aus Edelstahl (VA-Stahl) verwendet, der ein Verhältnis seiner Höhe zu seinem Durchmesser von 3,5 und einen Inhalt von 1500 Litern hat. Der Autoklav enthält einen Blattrührer mit einem rechteckigen Rührblatt der Abmessungen Länge 400 mm, Breite 250 mm, das in der oberen Hälfte des Autoklavs angeordnet ist. Dieser enthält ferner eine Standhöhenregelung, eine Einrichtung zur Messung des Druckes und der Temperatur der Polymerisationsmischung. Die Ausgangsprodukte werden am Kopf des Autoklavs zugeführt, die erzeugte Polymerisatdispersion am Boden des Autoklavs abgeführt. Der Autoklav enthält ferner einen Doppelmantel, der von Wasser als Heiz- bzw. Kühlflüssigkeit durchflossen ist.

Die aus dem Autoklaven ausgetragene Polymerisatdispersion wird entspannt und anschließend in einem Behälter, der Einbauten enthält, bei einer Temperatur von etwa 40°C und einem Druck von 30 kPa von noch enthaltenem Restmonomeren befreit, wobei nur geringe Mengen Wasser verdampfen. Die so behandelte Polymerisatdispersion enthält weniger als 0,05 Gew.-%, bezogen auf die Dispersion, Restmonomere. Sie wird, wie weiter unten näher beschrieben, durch Versprühen in Zweistoffdüsen in einem erwärmten Luftstrom getrocknet. Die Luft hat am Trocknereingang eine Temperatur von 170°C, am Trocknerausgang eine Temperatur von 60°C.

## Vergleichsversuch A

In der oben näher beschriebenen Apparatur wird eine kontinuierliche Emulsionspolymerisation von Vinylchlorid gestartet. Nachdem sich konstante Bedingungen eingestellt haben, werden getrennt voneinander je Stunde 60 kg monomeres Vinylchlorid, 72 kg einer wäßrigen Emulgatorlösung, die 1,35 Gew.-%, bezogen auf die Lösung, des Natriumsalzes eines Alkylsulfonsäuregemisches, das im wesentlichen aus Alkylsulfonsäuren mit 14 bis 16 C-Atomen besteht (Mersolat® K 30) und 0,1 Gew.-%, bezogen auf die Lösung, Di-natriumphosphat enthält, sowie (nach Bedarf) kleinere Mengen einer wäßrigen Lösung, die 2 Gew.-%, bezogen auf die Lösung, Kaliumpersulfat enthält, kontinuierlich eingeführt. Der Rührer im Autoklaven läuft mit 90 Upm. Die Temperatur der Polymerisationsmischung im Autoklaven wird konstant bei 55°C gehalten. Die erzeugte Polymerisatdispersion wird am unteren Teil des Autoklavs abgeführt und von Restmonomerem befreit, wie oben beschrieben. Sie enthält einen Feststoffgehalt von 42 bis 43 Gew.-% und wird in den in Tabelle I angegebenen Zeitabständen jeweils 2 Stunden lang separat gesammelt und getrocknet. Die in der übrigen Zeit angefallene Polymerisatdispersion wird ihrerseits gesammelt und am Ende des Versuchs getrocknet. Es wird so ein Vinylchloridpolymerisat erhalten, das 1,8 Gew.-%, bezogen auf das Polymerisat, Emulgator enthält, einen K-Wert von 68,4 und einen Anteil an groben Partikeln (»Grieß«) von 3,2 Gew.-%, bezogen auf die Gesamtmenge des erzeugten Polymerisats, aufweist.

An den Polymerisatproben, die in den Zeitabständen genommen wurden, sowie an dem Polymerisat aus der in der übrigen Zeit gesammelten Dispersion wird die Pastenviskosität und Thermostabilität bestimmt. Die erhaltenen Werte sind in nachfolgender Tabelle I aufgeführt.

Beispiel 1

Es wird verfahren, wie im Vergleichsversuch A beschrieben, jedoch wird an der vom restlichen Monomeren weitgehend befreiten Polymerisatdispersion in Abständen von je 1 Stunde die Oberflächenspannung mit dem Digital-Tensiometer K 10 der Firma Krüss/Hamburg, gemessen und anhand der erhaltenen Werte die kontinuierliche Einspeisung der Emulgatorlösung in den Autoklaven nach folgendem Schema geregelt:

| Gemessene Oberflächenspannung $mN \cdot m^{-1}$ | Eingespeiste Emulgatorlösung $kg \cdot h^{-1}$ |
|---|---|
| 33 | 68 |
| 34 | 70 |
| 35 | 72 |
| 36 | 74 |
| 37 | 76 |

Die erhaltene Polymerisatdispersion hat einen Feststoffgehalt von 43 Gew.-%. Nach den in untenstehender Tabelle II aufgeführten Polymerisationszeiten werden jeweils 2 Stunden lang Proben der Polymerisatdispersion genommen, die übrige Polymerisatdispersion wird ebenfalls gesammelt und alle Dispersionsproben getrocknet, wie oben beschrieben. Das erhaltene Polymerisat hat einen K-Wert von 67,8 und einen Anteil an groben Partikeln (»Grieß«) von 0,3 Gew.-%, bezogen auf die Gesamtmenge des erzeugten Polymerisates.

An allen Polymerisatproben wird die Pastenviskosität und Thermostabilität bestimmt. Die erhaltenen Werte sind in nachfolgender Tabelle II zusammen mit der bei der jeweiligen Polymerisationszeit gemessenen Oberflächenspannung aufgeführt. An der gesammelten Polymerisatdispersion wird vor Versprühung ebenfalls die Oberflächenspannung bestimmt.

Es wird eine wäßrige Lösung bereitet, die enthält:

1,35 Gew.-% Natriumalkansulfonatgemisch (Mersolat® K 30)
0,1 Gew.-% Di-natriumphosphat
0,08 Gew.-% Kaliumpersulfat

Diese Lösung wird auf die gleiche Temperatur gebracht wie die von restlichem Monomeren befreite Polymerisatdispersion und mit dem gleichen Gerät die Oberflächenspannung gemessen. Sie beträgt 32 $mN \cdot m^{-1}$. Wie aus Tabelle II ersichtlich, liegt die Oberflächenspannung der Polymerisatdispersion bei den einzelnen Probenahmezeiten um 1,6 bis 4,4 $mN \cdot m^{-1}$ über der Oberflächenspannung der wäßrigen Emulgatorlösung, die nach Art und Menge soviel Emulgator und weitere Polymerisationshilfsstoffe enthält wie eine Lösung der Gesamtmenge aller für die Polymerisation verwendeten Emulgatoren und weiteren Polymerisationshilfsstoffe in der Gesamtmenge des während der Polymerisation zugeführten Wassers.

Tabelle I

| Zeit nach Polymerisationsbeginn Tage | Pastenviskosität, Pa · s | | Thermostabilität min |
|---|---|---|---|
| | 1 h | 24 h | |
| 3 | 3,9 | 6,9 | 37 |
| 4 | 3,9 | 6,7 | 42 |
| 4,5 | 3,2 | 4,4 | 39 |
| 5 | 6,4 | 13,3 | 22 |
| 5,5 | 7,1 | 11,3 | 23 |
| 6 | 3,4 | 5,1 | 40 |
| 7 | 4,8 | 7,8 | 27 |
| gesammelter Polymerisatlatex: | | | |
| 3—7 | 4,8 | 7,5 | 31 |

Tabelle II

| Zeit nach Polymerisationsbeginn Tage | Oberflächen- spannung mN · m⁻¹ | Pastenviskosität Pa · s | | Thermostabilität min |
|---|---|---|---|---|
| | | 1 h | 24 h | |
| 3 | 36,2 | 3,8 | 5,2 | 39 |
| 3,5 | 35,0 | 3,7 | 5,0 | 41 |
| 4 | 36,4 | 3,7 | 4,9 | 43 |
| 4,5 | 34,7 | 3,8 | 5,0 | 40 |
| 5 | 33,6 | 3,4 | 4,7 | 42 |
| 5,5 | 34,5 | 3,5 | 4,7 | 39 |
| 6 | 34,2 | 3,6 | 4,6 | 41 |
| gesammelte Polymerisatdispersion: | | | | |
| 3—6 | 34,8 | 3,7 | 4,8 | 42 |

Vergleichsversuch B

In der oben näher beschriebenen Apparatur wird eine kontinuierliche Emulsionspolymerisation von Vinylchlorid gestartet. Nachdem sich konstante Bedingungen eingestellt haben, wird getrennt voneinander je Stunde 60 kg monomeres Vinylchlorid, 72 kg einer wäßrigen Emulgatorlösung, die 0,2 Gew.-%, bezogen auf die Lösung, des Natriumsalzes eines Alkylsulfonsäuregemisches, das im wesentlichen aus Alkylsulfonsäuren mit 14 bis 16 C-Atomen besteht (Mersolat® K 30) 0,7 Gew.-%, bezogen auf die Lösung, des Natriumsalzes des Diisodecylsulfobernsteinsäureesters und 0,1 Gew.-%, bezogen auf die Lösung, Natriumbicarbonat enthält, sowie (nach Bedarf) kleinere Mengen einer wäßrigen Lösung, die 2 Gew.-%, bezogen auf die Lösung, Kaliumpersulfat enthält, kontinuierlich eingeführt. Der Rührer im Autoklaven läuft mit 90 Upm. Die Temperatur der Polymerisationsmischung im Autoklaven wird konstant bei 50°C gehalten. Die erzeugte Polymerisatdispersion wird am unteren Teil des Autoklaven kontinuierlich abgeführt und von Restmonomeren befreit, wie oben beschrieben.

Nach 36 Stunden Polymerisationszeit hat die Polymerisatdispersion einen Feststoffgehalt von 43 Gew.-% erreicht. Im Verlauf der nächsten Stunden wird an der aus dem Reaktor abgezogenen Polymerisatdispersion die Bildung von Koagulat beobachtet, das nach insgesamt 42 Stunden Polymerisationszeit mehr als 10 Gew.-% des Polymerisatanteils in der Dispersion ausmacht. Da eine solche Dispersion nach den in der Technik üblicherweise verwendeten Methoden nicht mehr getrocknet werden kann, wird die Polymerisation abgestellt.

Beispiel 2

Es wird verfahren wie im Vergleichsversuch B beschrieben, jedoch wird an der vom restlichen Monomeren weitgehend befreiten Polymerisatdispersion kontinuierlich die Oberflächenspannung mit dem Gerät »Sensadyne 5000« der Madison Kipp Corp./Madison, USA, gemessen und anhand der erhaltenen Werte die kontinuierliche Einspeisung der Emulgatorlösung in den Autoklaven nach folgendem Schema geregelt:

| Gemessene Oberflächenspannung $mN \cdot m^{-1}$ | Eingespeiste Emulgatorlösung $kg \cdot h^{-1}$ |
|---|---|
| 28 | 68 |
| 28,5 | 70 |
| 29 | 72 |
| 29,5 | 74 |
| 30 | 76 |

Die erhaltene Polymerisatdispersion hat einen Feststoffgehalt von 42 bis 43 Gew.-%. Nach den in untenstehender Tabelle III aufgeführten Polymerisationszeiten werden jeweils 2 Stunden lang Proben der Polymerisatdispersion genommen, die übrige Polymerisatdispersion wird ebenfalls gesammelt und alle Dispersionsproben getrocknet, wie oben beschrieben. Das erhaltene Polymerisat hat einen K-Wert von 72,1 und einen Anteil an groben Partikeln (»Grieß«) von 0,5 Gew.-%, bezogen auf die Gesamtmenge des erzeugten Polymerisates.

An allen Polymerisatproben wird die Pastenviskosität und Thermostabilität bestimmt. Die erhaltenen Werte sind in nachfolgender Tabelle III zusammen mit der bei der jeweiligen Polymerisationszeit gemessenen Oberflächenspannung aufgeführt. An der gesammelten Polymerisatdispersion wird vor Versprühung ebenfalls die Oberflächenspannung bestimmt.

Es wird eine wäßrige Lösung bereitet, die enthält:

0,7  Gew.-% Natriumsalz des Diisodecylsulfobernsteinsäureesters
0,2  Gew.-% Natriumalkansulfonatgemisch (Mersolat® K 30)
0,1  Gew.-% Natriumbicarbonat
0,06 Gew.-% Kaliumpersulfat
0,27 Gew.-% Isopropanol (das Natriumsalz des Diisodecylsulfobernsteinsäureesters wird als 65gew.-%ige Lösung eingesetzt, die außer dem Ester 10 Gew.-% Wasser und 25 Gew.-% Isopropanol enthält).

Diese Lösung wird auf die gleiche Temperatur gebracht wie die von restlichem Monomeren befreite Polymerisatdispersion und mit dem gleichen Gerät die Oberflächenspannung gemessen. Sie beträgt 27 $mN \cdot m^{-1}$. Wie aus Tabelle III ersichtlich, liegt die Oberflächenspannung der Polymerisatdispersion bei den einzelnen Probenahmezeiten um 1,2 bis 3,1 $mN \cdot m^{-1}$ über der Oberflächenspannung der wäßrigen Emulgatorlösung, die nach Art und Menge soviel Emulgator und weitere Polymerisationshilfsstoffe enthält wie eine Lösung der Gesamtmenge aller für die Polymerisation verwendeten Emulgatoren und weiteren Polymerisationshilfsstoffe in der Gesamtmenge des während der Polymerisation zugeführten Wassers.

### Vergleichsversuch C

In der oben näher beschriebenen Apparatur wird eine kontinuierliche Emulsionspolymerisation von Vinylchlorid gestartet. Nachdem sich konstante Bedingungen eingestellt haben, werden getrennt voneinander je Stunde 60 kg einer Mischung, die aus 95 Gew.-Teilen monomerem Vinylchlorid und 5 Gew.-Teilen monomerem Vinylacetat besteht, 66 kg einer Emulgatorlösung, die 1,2 Gew.-%, bezogen auf die Lösung, des Natriumsalzes der Dodecylbenzolsulfonsäure und 0,1 Gew.-%, bezogen auf die Lösung, Natriumbicarbonat enthält, sowie (nach Bedarf) kleinere Mengen einer wäßrigen Lösung, die 2 Gew.-%, bezogen auf die Lösung, Kaliumpersulfat enthält, kontinuierlich eingeführt. Der Rührer im Autoklaven läuft mit 90 Upm. Die Temperatur der Polymerisationsmischung im Autoklaven wird konstant bei 54°C gehalten. Die erzeugte Polymerisatdispersion wird am unteren Teil des Autoklavs kontinuierlich abgeführt und von Restmonomeren befreit, wie oben beschrieben. Sie enthält einen Feststoffgehalt von 44 bis 45 Gew.-% und wird in den in Tabelle IV angegebenen Zeitabständen jeweils 2 Stunden lang separat gesammelt und getrocknet. Die in der übrigen Zeit angefallene Polymerisatdispersion wird ihrerseits gesammelt und am Ende des Versuches getrocknet. Es wird so ein Vinylchlorid-Vinylacetat-Copolymerisat erhalten, das 1,5 Gew.-%, bezogen auf das Polymerisat, Emulgator enthält, einen K-Wert von 69,5 und einen Anteil an groben Partikeln (»Grieß«) von 1,7 Gew.-%, bezogen auf die Gesamtmenge des erzeugten Polymerisates, aufweist.

An den Polymerisatproben, die in den Zeitabständen genommen wurden, sowie an dem Polymerisat aus der in der übrigen Zeit gesammelten Dispersion wird die Pastenviskosität und Thermostabilität bestimmt. Die erhaltenen Werte sind in nachfolgender Tabelle IV aufgeführt.

### Beispiel 3

Es wird verfahren wie im Vergleichsversuch C beschrieben, jedoch wird an der von den restlichen Monomeren weitgehend befreiten Polymerisatdispersion in Abständen von je 1 Stunde die Oberflächenspannung mit dem Digital-Tensiometer K 10 der Firma Krüss/Hamburg, gemessen und anhand der erhaltenen Werte die kontinuierliche Einspeisung der Emulgatorlösung in den Autoklaven nach folgendem Schema geregelt:

| Gemessene Oberflächenspannung mN · m⁻¹ | Eingespeiste Emulgatorlösung kg · h⁻¹ |
|---|---|
| 35 | 68 |
| 35,5 | 70 |
| 36 | 72 |
| 36,5 | 74 |
| 37 | 76 |

Die erhaltene Polymerisatdispersion hat einen Feststoffgehalt von 44 bis 45 Gew.-%. Nach den in untenstehender Tabelle V aufgeführten Polymerisationszeiten werden jeweils 2 Stunden lang Proben der Polymerisatdispersion genommen, die übrige Polymerisatdispersion wird ebenfalls gesammelt und alle Dispersionsproben getrocknet, wie oben beschrieben. Das erhaltene Polymerisat hat einen K-Wert von 69,3 und einen Anteil an groben Partikeln (»Grieß«) von 0,3 Gew.-%, bezogen auf die Gesamtmenge des erzeugten Polymerisates.

An allen Polymerisatproben wird die Pastenviskosität und Thermostabilität bestimmt. Die erhaltenen Werte sind in nachfolgender Tabelle V zusammen mit der bei der jeweiligen Polymerisationszeit gemessenen Oberflächenspannung aufgeführt. An der gesammelten Polymerisatdispersion wird vor Versprühung ebenfalls die Oberflächenspannung bestimmt.

Es wird eine wäßrige Lösung bereitet, die enthält:

1,2 Gew.-% Natriumsalz der Dodecylbenzolsulfonsäure (der gleiche Emulgator wie in Beispiel 3; der Dodecylrest ist mit Methylgruppen verzweigt und besteht aus 4 Propyleneinheiten hintereinander),
0,1 Gew.-% Natriumbicarbonat,
0,12 Gew.-% Kaliumpersulfat.

Diese Lösung wird auf die gleiche Temperatur gebracht wie die von den restlichen Monomeren befreite Polymerisatdispersion und mit dem gleichen Gerät die Oberflächenspannung gemessen. Sie beträgt 34 mN · m⁻¹. Wie aus Tabelle V ersichtlich, liegt die Oberflächenspannung der Polymerisatdispersion bei den einzelnen Probenahmezeiten um 1,1 bis 2,4 mN · m⁻¹ über der Oberflächenspannung der wäßrigen Emulgatorlösung, die nach Art und Menge soviel Emulgator und weitere Polymerisationshilfsstoffe enthält wie eine Lösung der Gesamtmenge aller für die Polymerisation verwendeten Emulgatoren und weiteren Polymerisationshilfsstoffe in der Gesamtmenge des während der Polymerisation zugeführten Wassers.

Tabelle III

| Zeit nach Polymerisationsbeginn Tage | Oberflächen- spannung mN · m⁻¹ | Pastenviskosität Pa · s | | Thermostabilität min |
|---|---|---|---|---|
| | | 1 h | 24 h | |
| 3 | 28,2 | 2,6 | 3,8 | 32 |
| 3,5 | 29,4 | 2,9 | 3,6 | 34 |
| 4 | 28,7 | 2,8 | 3,8 | 32 |
| 5 | 28,9 | 3,1 | 4,0 | 33 |
| 6 | 30,1 | 2,9 | 4,0 | 33 |
| 7 | 29,2 | 2,8 | 3,6 | 34 |
| 8 | 28,6 | 2,6 | 3,6 | 35 |
| gesammelte Polymerisatdispersion: | | | | |
| 3—8 | 28,3 | 2,7 | 3,6 | 34 |

Tabelle IV

| Zeit nach Polymerisationsbeginn Tage | Pastenviskosität, Pa · s | | Thermostabilität min |
|---|---|---|---|
| | 1 h | 24 h | |
| 3 | 6,5 | 8,3 | 36 |
| 3,5 | 7,9 | 9,2 | 35 |
| 4 | 8,4 | 10,1 | 21 |
| 4,5 | 8,7 | 10,2 | 19 |
| 5 | 7,1 | 8,8 | 37 |
| 5,5 | 6,8 | 8,6 | 35 |
| 6 | 7,6 | 9,0 | 24 |
| gesammelte Polymerdispersion: | | | |
| 3—6 | 7,7 | 9,1 | 25 |

12

# 0 073 015

Tabelle V

| Zeit nach Polymerisations- beginn Tage | Oberflächen- spannung mN · m$^{-1}$ | Pastenviskosität Pa · s 1 h | 24 h | Thermostabilität min |
|---|---|---|---|---|
| 3 | 35,1 | 6,2 | 8,0 | 35 |
| 3,5 | 35,7 | 6,4 | 8,0 | 35 |
| 4 | 36,2 | 6,7 | 8,2 | 34 |
| 4,5 | 36,0 | 6,7 | 7,8 | 37 |
| 5 | 36,4 | 6,3 | 7,8 | 35 |
| 5,5 | 35,8 | 6,5 | 8,1 | 36 |
| 6 | 35,6 | 6,1 | 7,7 | 36 |
| gesammelte Polymerdispersion: | | | | |
| 3—6 | 35,3 | 6,4 | 7,9 | 35 |

Aus den Polymerisaten, die gemäß Beispiel 1, 2 und 3 erhalten werden, werden nach der Prüfmethode DIN 53 495 Folien hergestellt und an ihnen die Wasseraufnahme in Gewichtsprozent gemessen. Ferner werden von den genannten Polymerisaten 1 mm dicke Preßplatten hergestellt und an ihnen die Transparenz anhand des Promille-Streulichtanteils mit einer Ulbrichtkugel gemessen, wie beschrieben in der Zeitschrift »Kunststoffe«, Band 59, Seite 502 ff. (1969).

Zum Vergleich werden von Polymerisaten, die durch kontinuierliche Emulsionspolymerisation nach dem Stand der Technik erzeugt wurden und jeweils die hierfür übliche Minimalmenge von 2,3 Gew.-%, bezogen auf das Polymerisat, des gleichen Emulgators bzw. der gleichen Emulgatormischung wie in Beispiel 1, 2 oder 3 enthalten und auch etwa die gleichen K-Werte aufweisen, ebenfalls entsprechende Prüfkörper hergestellt und die Wasseraufnahme in Gewichtsprozent nach DIN 53 495 sowie die Transparenz charakterisiert durch Promille-Streulichtanteil an einer 1 mm dicken Preßplatte, wie beschrieben in der Zeitschrift »Kunststoffe« Loc. cit., gemessen.

Die erhaltenen Werte sind in untenstehender Tabelle VI aufgeführt. Beim Polymerisat gemäß Beispiel 2 und dem Vergleichspolymerisat gemäß dem Stand der Technik wurde auf eine Messung der Transparenz verzichtet, da das hier verwendete Emulgatorgemisch ohnehin eine erhebliche Trübung bei aus dem entsprechenden Polymerisat hergestellten Formkörpern ergibt, so daß man dieses Emulgatorgemisch, wenn besondere Anforderungen an Transparenz gestellt werden, nicht einsetzen würde.

Tabelle VI

| | Beispiel 1 | Vergleich St. d. Technik | Beispiel 2 | Vergleich St. d. Technik | Beispiel 3 | Vergleich St. d. Technik |
|---|---|---|---|---|---|---|
| Emulgatorgehalt % (im Pulver) | 1,8 | 2,3 | 1,2 | 2,3 | 1,5 | 2,3 |
| Wasseraufnahme % (Folie) | 1,8 | 2,5 | 1,3 | 2,0 | 1,6 | 2,3 |
| Transparenz % (Streulicht) | 270 | 360 | nicht gemessen | nicht gemessen | 170 | 320 |

13

**Patentansprüche**

1. Verfahren zur Polymerisation von Vinylchlorid in wäßriger Emulsion in Gegenwart von mindestens einem wasserlöslichen Initiator und mindestens einem wasserlöslichen Emulgator sowie in Abwesenheit oder Gegenwart von 0,5 bis 15 Gew.-%, bezogen auf eingesetztes Vinylchlorid, von mit Vinylchlorid copolymerisierbaren Monomeren und/oder mit Vinylchlorid pfropfpolymerisierbaren Polymeren, ferner in Abwesenheit oder Gegenwart von weiteren Polymerisationshilfsstoffen, wobei die Ausgangsstoffe einem Reaktionsraum kontinuierlich zugeführt werden, die erzeugte Polymerisatdispersion kontinuierlich aus dem Reaktionsraum abgezogen wird und die Oberflächenspannung der Polymerisationsmischung kontinuierlich oder in Abständen von 5 bis 90 min gemessen wird, dadurch gekennzeichnet, daß mit den gemessenen Werten der Oberflächenspannung die Zugabe des Emulgators zur Polymerisationsmischung so gesteuert wird, daß deren Oberflächenspannung auf Werten gehalten wird, die 1 bis 5 mN · m$^{-1}$ über der Oberflächenspannung einer wäßrigen Emulgatorlösung liegt, die nach Art und Menge soviel Emulgator(en) und, sofern angewendet, weitere Polymerisationshilfsstoffe enthält, wie eine Lösung der Gesamtmenge aller für die Polymerisation verwendeten Emulgatoren und weiteren Polymerisationshilfsstoffen in der Gesamtmenge des während der Polymerisation zugeführten Wassers.

2. Verfahren nach Anspruch 1, dadurch gekennzeichnet, daß die Zugabe des Emulgators zur Polymerisationsmischung so gesteuert wird, daß deren Oberflächenspannung auf Werten gehalten wird, die 1 bis 4 mN · m$^{-1}$ über der Oberflächenspannung einer wäßrigen Emulgatorlösung liegen, die nach Art und Menge soviel Emulgator(en) und, sofern angewendet, weitere Polymerisationshilfsstoffe enthält, wie eine Lösung der Gesamtmenge aller für die Polymerisation verwendeten Emulgatoren und weiteren Polymerisationshilfsstoffen in der Gesamtmenge des während der Polymerisation zugeführten Wassers.

3. Verfahren nach einem der Ansprüche 1 oder 2, dadurch gekennzeichnet, daß die Konzentration des Emulgators in der Polymerisationsmischung 1,0 bis 1,8 Gew.-%, bezogen auf eingesetzte Monomere, beträgt.

**Claims**

1. A process for the polymerisation of vinyl chloride in aqueous emulsion in the presence of at least one water-soluble initiator and at least one water-soluble emulsifier and in the absence or presence of 0.5 to 15% by weight, relative to vinyl chloride employed, of monomers which are copolymerisable with vinyl chloride and/or polymers which can be graftpolymerised with vinyl chloride, and also in the absence or presence of further polymerisation auxiliaries, the starting materials being fed continuously to a reaction space, the polymer dispersion produced being removed continuously from the reaction space and the surface tension of the polymerisation mixture being determined continuously or at intervals of 5 to 90 minutes characterised by controlling, by means of the values of surface tension determined, the addition of the emulsifier to the polymerisation mixture in such a way that the surface tension of the latter is kept at values which are 1 to 5 mN · m$^{-1}$ above the surface tension of an aqueous emulsifier solution containing, in terms of type and quantity, as much emulsifier(s) and, if used, further polymerisation auxiliaries, as a solution of the total quantity of all the emulsifiers and further polymerisation auxiliaries used for the polymerisation, in the total quantity of water fed in during the polymerisation.

2. The process as claimed in claim 1, characterised in that the addition of the emulsifier to the polymerisation mixture is controlled at such a rate that the surface tension of the latter is kept at values which are 1 to 4 mN · m$^{-1}$ above the surface tension of an aqueous emulsifier solution containing, in terms of type and quantity, as much emulsifier(s) and, if used, further polymerisation auxiliaries, as a solution of the total quantity of all the emulsifiers and further polymerisation auxiliaries used for the polymerisation, in the total quantity of water fed in during the polymerisation.

3. The process as claimed in one of claims 1 or 2, characterised in that the concentration of the emulsifier in the polymerisation mixture is 1.0 to 1.8% by weight, relative to monomers employed.

**Revendications**

1. Procédé de polymérisation de chlorure de vinyle en émulsion aqueuse en présence d'au moins un agent d'amorçage soluble dans l'eau et d'au moins un agent émulsionnant soluble dans l'eau ainsi qu'en l'absence ou en présence de 0,5 à 15% en poids, par rapport au chlorure de vinyle mis en œuvre, de monomères copolymérisables avec du chlorure de vinyle et/ou de polymères polymérisables par greffage avec du chlorure de vinyle, ainsi qu'en l'absence ou en présence d'autres substances auxiliaires de polymérisation, les substances de départ étant admises en continu dans une chambre réactionnelle, la dispersion produite de polymère étant soutirée en continu de la chambre réactionnelle et la tension superficielle du mélange de polymérisation étant mesurée en continu ou à des intervalles de 5 à 90 minutes, caractérisé en ce qu'avec les valeurs mesurées de la tension superficielle, l'addition de l'agent émulsionnant au mélange de polymérisation est réglée de façon que sa tension superficielle soit maintenue à des valeurs qui sont de 1 à 5 mN · m$^{-1}$ au-dessus de la tension superficielle d'une solution aqueuse d'agent émulsionnant qui d'après le type et la quantité contient autant d'agent(s) émulsionnant(s) et, dans le mesure où on en utilise, d'autres substances auxiliaires de polymérisation qu'une solution de la quantité totale de tous les agents émulsionnants et autres substances auxiliaires de polymérisation utilisés pour la polymérisation dans la quantité totale de l'eau admise pendant la polymérisation.

2. Procédé suivant la revendication 1, caractérisé en ce que l'addition de l'agent émulsionnant au mélange de polymérisation est réglée de façon que sa tension superficielle soit maintenue à des valeurs qui sont de 1 à 4 mN · m$^{-1}$ au-dessus de la tension superficielle d'une solution aqueuse d'agent émulsionnant qui d'après le type et la quantité contient autant d'agent(s) émulsionnant(s) et, dans le mesure où on en utilise, d'autres substances auxiliaires de polymérisation qu'une solution de la quantité totale de tous les agents émulsionnants et autres substances auxiliaires de polymérisation utilisés pour la polymérisation dans la quantité totale de l'eau admise pendant la polymérisation.

3. Procédé suivant l'une ou l'autre des revendications 1 et 2, caractérisé en ce que la concentration de l'agent émulsionnant dans le mélange de polymérisation est de 1,0 à 1,8% en poids, par rapport aux monomères mis en œuvre.